# EUROPÄISCHE PATENTSCHRIFT

(11) **EP 3 194 812 B1**
(45) Veröffentlichungstag und Bekanntmachung des Hinweises auf die Patenterteilung: **21.11.2018**
(21) Anmeldenummer: 15762634.2
(22) Anmeldetag: 14.09.2015
(51) Int. Cl.: F16H 57/04, F16H 3/00

(54) **LEITMITTEL ZUR ANORDNUNG IM BEREICH EINES GETRIEBES UND/ODER EINER KUPPLUNG EINES KRAFTFAHRZEUGES**
GUIDING MEANS FOR ARRANGEMENT IN THE AREA OF A TRANSMISSION AND/OR A CLUTCH OF A MOTOR VEHICLE
MOYEN DE GUIDAGE DESTINÉ À ÊTRE DISPOSÉ AU NIVEAU D'UNE BOÎTE DE VITESSES ET/OU D'UN EMBRAYAGE D'UN VÉHICULE AUTOMOBILE

(30) Priorität: 15.09.2014 DE 102014218439
(43) Veröffentlichungstag der Anmeldung: 26.07.2017
(73) Patentinhaber: Volkswagen Aktiengesellschaft, 38440 Wolfsburg (DE)
(72) Erfinder: WILKEN, Martin, 38124 Braunschweig (DE); WUST, Sebastian, 38440 Wolfsburg (DE); DIETRICH, Dennis, 38124 Braunschweig (DE); RÜTHER, Thomas, 38550 Isenbüttel (DE); RITTER, Bastian, 38226 Salzgitter (DE); SPRENGER, Ralf, 38518 Gifhorn (DE)
(86) Internationale Anmeldenummer: PCT/EP2015/070945
(87) Internationale Veröffentlichungsnummer: WO 2016/041897

(56) Entgegenhaltungen:
- EP-A1- 2 461 075
- DE-A1-102009 032 338
- DE-A1-102009 052 595

## Beschreibung

Die Erfindung betrifft ein Leitmittel nach den Merkmalen des Oberbegriffes des Patentanspruches 1. Weiterhin betrifft die Erfindung ein Getriebe mit einer nasslaufenden Reibkupplung, insbesondere einer Doppelkupplung mit dem zuvor genannten Leitmittel.

Im Stand der Technik sind unterschiedlich ausgebildete Leitmittel zur Anordnung im Bereich eines Getriebes und/oder im Bereich einer Kupplung eines Kraftfahrzeuges bekannt. Derartige Leitmittel werden zur zielgerichteten Ableitung und/oder Umleitung eines Teils einer Schmiermittel- und/oder einer Kühlmittelströmung im Bereich des Getriebes und/oder im Bereich der Kupplung entsprechend angeordnet. Insbesondere bei nasslaufenden Reibkupplungen eines Kraftfahrzeuges, insbesondere bei Lamellenkupplungen werden derartige Leitmittel im Bereich des Außenumfanges dieser Kupplungen angeordnet, um das von der Kupplung teils in radialer Richtung, teils in Umfangsrichtung (tangentialer Richtung) aufgrund von Fliehkräften weggeschleuderte Öl teilweise aufzufangen beziehungsweise einzusammeln, und dieses zielgerichtet zu bestimmten Komponenten der Kupplung und/oder des Getriebes hin abzuleiten, damit diese jeweiligen Komponenten dann geschmiert und/oder gekühlt werden.

So ist aus der DE 10 2005 059 115 A1 ein Ölschmiersystem für eine mit einem Gangschaltgetriebe wirkverbundene Mehrfachkupplung bekannt, bei dem die Schmierung eines Wälzlagers und eines Wellendichtringes mit Hilfe von zwischen dem Gehäusedeckel und dem Kupplungskorb vorgesehenen Leitmitteln, hier mit Hilfe von Leitblechen realisiert wird. So sind mehrere erste, radial ausgerichtete Leitmittel vorgesehen, die trichterförmig ausgebildet sind, um einen Schmiermittelfluss zum Wälzlager beziehungsweise zum Wellendichtring zu gewährleisten. Zusätzlich ist aber noch ein weiteres zweites Leitmittel vorgesehen, das einen teilweise gebogenen Wandungsbereich aufweist, der sich teils in Umfangsrichtung und teils in axialer Richtung außen über den Kupplungskorb erstreckt. Dieses zweite Leitmittel verstärkt den Schmiermittelfluss zu den trichterförmig ausgebildeten ersten Leitmitteln.

Nachteilig bei dem zuvor genannten Ölschmiersystem ist, dass eine Vielzahl von unterschiedlich ausgebildeten Leitmitteln vorgesehen werden muss, um den gewünschten Schmiermittelfluss zu gewährleisten, so dass der Kosten- und Montageaufwand für das bekannte Ölschmiersystem sehr groß ist.

So ist aus der DE 10 2009 032 338 A1, von der die Erfindung ausgeht, ein Leitmittel zum Einbau in einem Getriebe und/oder in einer Kupplungsanordnung bekannt, wobei das Leitmittel zunächst einen gebogenen Wandungsbereich aufweist und wobei das Leitmittel, insbesondere der gebogene erste Wandungsbereich, im Bereich des Außenumfangs einer nasslaufenden Reibkupplung angeordnet ist. Hierbei erstreckt sich der gebogene Wandungsbereich im wesentlichen über die gesamte axiale Länge der Kupplung. Zusätzlich weist dieses Leitmittel eine Auffangkammer zum Auffangen und zum Ableiten eines Teils der Schmiermittel- und/oder der Kühlmittelströmung auf. Die Auffangkammer ist am Ende des gebogenen Wandungsbereiches ausgebildet, insbesondere ist der Wandungsbereich an seinem Endbereich nach innen um 180° Grad gebogen, wobei ein Zwischenraum zwischen der Innenfläche des gebogenen Wandungsbereiches und dem umgebogenen Endbereich ausgebildet ist, der dann die Auffangkammer zum Ableiten des Schmiermittels bildet. Zusätzlich ist an einem axialen Ende des Leitmittels ein Fortsatz vorgesehen, mit dessen Hilfe das in der Auffangkammer aufgefangene Schmiermittel beziehungsweise Kühlmittel zielgerichtet abgleitet werden kann, hier einem Sammelraum zugeleitet wird. Der Fortsatz ist mit der Auffangkammer strömungsverbunden und leitet das Schmier- bzw. Kühlmittel in den Sammelraum ab.

Bei dem bekannten Leitmittel, das als Leitblech ausgebildet ist, wird das durch die Drehbewegung der Kupplung, hier der nasslaufenden Reibkupplung radial nach außen und teilweise in tangentialer Richtung geschleuderte Schmier- beziehungsweise Kühlmittel zunächst mit Hilfe des gebogenen Wandungsbereiches (des Leitmittels) aufgefangen. Die Schmiermittelbeziehungsweise Kühlmitteltropfen prallen auf die Innenseite des gebogenen Wandungsbereiches und bewegen sich aufgrund der entsprechenden tangentialen Kraft- bzw. Bewegungskomponente in Richtung der Auffangkammer entlang der Innenseite des ersten Wandungsbereiches. Die Schmiermittel- und/oder Kühlmitteltropfen sammeln sich dann in der Auffangkammer, wobei das Leitmittel und der Fortsatz so ausgebildet ist, dass - bedingt durch die Schwerkraft - das Schmiermittel beziehungsweise das Kühlmittel dann zu dem zuvor genannten Sammelraum zielgerichtet abgeleitet wird. Das so mit Hilfe des Leitmittels abgeleitete Schmier- oder Kühlmittel kann also zu einem bestimmten Ort im Getriebegehäuse geleitet werden und steht dort zur Schmierung und/oder zur Kühlung von anderen Komponenten zur Verfügung.

Das im Stand der Technik bekannte Leitmittel ist aber noch nicht optimal ausgebildet. Aufgrund der Ausbildung der Auffangkammer durch einen am Ende
des gebogenen Wandungsbereiches um ein ca. 180° Grad nach innen gekrümmten Bereich, muss zunächst der gebogene Wandungsbereich immer auch in einem bestimmten Mindestabstand zum äußeren Umfang einer Kupplung angeordnet werden. Daher eignet sich das zuvor bekannte Leitmittel primär für nasslaufende Kupplungen, wobei dann Schmiermittelbeziehungsweise Kühlmitteltropfen nach außen geschleudert werden. Das zuvor genannte Leitmittel eignet sich jedoch nicht zur Anordnung bei nasslaufenden Kupplungen, insbesondere bei Reibkupplungen, die besonders stark geschmiert und/oder gekühlt werden und daher von einer im wesentlichen konstanten Schmiermittel- beziehungsweise Kühlmittelströmung umgeben sind. Das bekannte Leitmittel ist strömungstechnisch zum Auffangen und Ableiten einer vorzugsweise kontinuierlichen Schmiermittel- beziehungsweise Kühlmittelströmung nämlich nicht optimal ausgebildet, da einerseits der gebogene Wandungsbereich in einem bestimmten Mindestabstand zum äußeren Umfang der Kupplung angeordnet werden muss, und andererseits eine Schmiermittel- beziehungsweise Kühlmittelströmung mit der bekannten Auffangkammer beziehungsweise mit dem bekannten Fortsatz nicht auf einfache Weise so ohne weiteres zielgerichtet abgeleitet werden kann.

Aus der gattungsgemässen DE 10 2009 052 595 A1 ist ein Leitmittel bekannt, das eine Auffangkammer mit einer Strömungsmittelabholkante aufweist. Über diese Auffangkammer wird dann das Fluid über Kanäle und Abgabeöffnungen entsprechend verteilt. Die Verteilung, insbesondere die "Aufnahme" des Fluids ist aber noch nicht optimal ausgebildet.
Der Erfindung liegt daher die Aufgabe zugrunde, das bekannte Leitmittel nun derart auszugestalten und weiterzubilden, dass insbesondere bei einer kontinuierlichen Schmiermittel- und/oder Kühlmittelströmung diese zumindest teilweise auffangbar und/oder zielgerichtet ableitbar ist, wobei der Montage- und Wartungsaufwand für das Leitmittel beziehungsweise der Wartungsaufwand für das dann realisierte Schmiermittel- beziehungsweise Kühlmittelsystem entsprechend vermindert ist.
Die zuvor aufgezeigte Aufgabe ist nun mit den Merkmalen des Patentanspruches 1 gelöst.
Dadurch, dass ein Teilbereich des - ersten - gebogenen Wandungsbereiches zur Ausbildung der - ersten - Auffangkammer sich zumindest teilweise im Wesentlichen radial nach innen erstreckt und/oder in Richtung radial nach innen muldenförmig ausgebildet ist, kann der gesamte - erste - gebogene Wandungsbereich nun wesentlich näher am Außenumfang einer Kupplung angeordnet werden. Das Leitmittel ist nun auch einfacher montierbar. Der bisher im Stand der Technik bekannte am Ende des Leitmittels um ca. 180° Grad gebogene Endbereich entfällt, dadurch ist das erfindungsgemäße Leitmittel nun auch kompakter ausgebildet.

Insbesondere ist die - erste - Auffangkammer nun in radialer Richtung nach außen offen ausgebildet, weist eine Eintrittsöffnung, eine Austrittsöffnung, insbesondere im Bereich der Eintrittsöffnung auch eine - erste - Strömungsmittelabhobelkante auf. Die erste Auffangkammer ist so ausgebildet, dass nun nicht nur die vom Umfang einer Kupplung herausgeschleuderten Schmiermittel- beziehungsweise Kühlmitteltropfen abgefangen werden, sondern dass eine teils in radialer, teils in tangentialer Richtung existierende, insbesondere kontinuierliche Schmiermittel- beziehungsweise Kühlmittelströmung vom Umfangsbereich einer nasslaufenden Kupplung strömungstechnisch "abgehobelt" werden kann. Hierbei bildet dann der radiale Außenbereich, also die Außenseite des gebogenen - ersten - Wandungsbereiches im Wesentlichen den Bodenbereich der ersten Auffangkammer.

Zusätzlich weist das Leitmittel einen - ersten - Ablaufstutzen auf, der mit der Austrittsöffnung der - ersten - Auffangkammer strömungsverbunden ist. Hierzu ist der Ablaufstutzen so ausgebildet, dass dieser einen ersten, insbesondere auch teilweise geschlossenen Strömungskanal aufweist. Über einen Umlenkbereich der Auffangkammer wird das Strömungsmittel von der Eintrittsöffnung zur Austrittsöffnung der Auffangkammer und dann in den ersten Ablaufstutzen geleitet, wobei der Strömungskanal in dem Ablaufstutzen gegenüber der teils radialen, teils tangential ausgerichteten Schmiermittel- beziehungsweise Kühlmittelströmung (im Umfangsbereich einer Kupplung) abgeschirmt ist, um eine ruhige und kontinuierliche Ableitung des in der Auffangkammer gesammelten Schmier- beziehungsweise Kühlmittels zu gewährleisten.

Das Leitmittel weist einen sich teilweise radial nach innen erstreckenden zweiten Wandungsbereich auf. Der erste und der zweite Wandungsbereich sind miteinander verbunden, insbesondere als integrale Bestandteile des Leitmittels ausgebildet. Mit Hilfe des zweiten Wandungsbereiches und eines Befestigungsmittels oder mehrerer Befestigungsmittel ist dann das Leitmittel auf einfache Weise an einem Gehäuse eines Getriebes oder an dem Gehäuse einer Kupplung in einer entsprechenden Position befestigbar, beispielsweise mit Hilfe von Schrauben und/oder Nieten.

Es sind aber nun mehrere Auffangkammern vorgesehen. Es ist mindestens eine zweite Auffangkammer am Leitmittel ausgebildet. Auch diese zweite Auffangkammer weist eine Eintritts- und eine Austrittsöffnung auf zur Sammlung beziehungsweise zum Auffangen von Schmiermittel beziehungsweise von Kühlmittel. Auch der Bodenbereich der zweiten Auffangkammer ist im wesentlichen durch die radial nach innen ausgerichtete äußere Seite/Außenseite des ersten Wandungsbereiches gebildet beziehungsweise ist der erste Wandungsbereich auch zur Ausbildung der zweiten Auffangkammer muldenförmig ausgebildet, wobei auch die zweite Auffangkammer radial nach außen offen ausgebildet ist. Im Bereich der Eintrittsöffnung der zweiten Auffangkammer bildet der erste Wandungsbereich wiederum eine zweite Strömungsmittelabhobelkante. Auch hier kann dann insbesondere ein Teil einer kontinuierlichen Schmiermittel- und/oder Kühlmittelströmung am Außenumfang einer Kupplung auf einfache Weise "abgehobelt"
werden, so dass sich ein Teil des Schmiermittels beziehungsweise des Kühlmittels in der zweiten Auffangkammer sammelt.

Das Leitmittel kann in dem ersten Wandungsbereich und/oder dem zweiten Wandungsbereich eine Durchgangsöffnung aufweisen. Der Durchgangsöffnung ist ein sich im Wesentlichen radial nach innen erstreckender Auffangbereich des ersten Wandungsbereichs benachbart, wobei der Auffangbereich eine dritte Strömungsmittelabhobelkante bildet. Mittels der dritten Strömungsmittelabhobelkante kann Kühlmittelströmung vom Umfangsbereich einer nasslaufenden Kupplung strömungstechnisch "abgehobelt" werden und durch die Durchgangsöffnung in dem ersten und/oder dem zweiten Wandungsbereich weiter gefördert werden. Somit kann eine zusätzliche Schmierung beanspruchten Stellen im Räderkasten des Getriebes z. B. eines Ausgleichsgetriebes sichergestellt werden.

Auch die zweite Auffangkammer weist einen zweiten Ablaufstutzen auf, der mit der Austrittsöffnung der zweiten Auffangkammer strömungsverbunden ist, und der wiederum einen zweiten Strömungskanal zur zielgerichteten Ableitung des Schmier- beziehungsweise Kühlmittels aufweist. Die Austrittsöffnung der ersten und/oder zweiten Auffangkammer sowie der erste und/oder der zweite Ablaufstutzen sind insbesondere so ausgebildet, so dass aufgrund der Schwerkraft eine zielgerichtete Ableitung des Schmier- und/oder Kühlmittels realisiert ist.

Vorzugsweise ist das Leitmittel aus Kunststoff hergestellt oder als ein Leitblech (aus Metall) ausgebildet. Vorzugsweise ist das Leitmittel an einem Kupplungsgehäuse angeordnet, wobei mit Hilfe wenigstens eines Ablaufstutzens eine zielgerichtete Versorgung wenigstens einer Triebwelle eines Getriebes, insbesondere eines Doppelkupplungsgetriebes, mit dem abgeleiteten Schmier- und/oder Kühlmittel realisiert ist. Unter dem Ausdruck "Triebwelle" ist insbesondere eine sich parallel zu einer Eingangswelle erstreckende Welle, wobei bei einem Zweiwellengetriebe ist die Ausgangswelle als Triebwelle anzusehen. Die erfindungsgemäße Idee ist, mit einem aus der Kupplung geschleuderten Schmier- und/oder Kühlmittel andere Welle bzw. Wellen des Getriebes zu versorgen, als die koaxial mit der Kupplung angeordnete Eingangswelle bzw. Eingangswellen.

In einer vorteilhaften Variante ist wenigstens eine der Triebwellen wenigstens teilweise als eine Hohlwelle ausgebildet, wobei der Ablaufstutzen mit dem Innenraum der Triebwelle strömungstechnisch verbunden ist. Dadurch wird das Schmiermittel gezielt in die Triebwelle gefördert, aus deren es dann weiter z. B. zu den auf der Triebwelle drehbar gelagerten Losrädern oder Hohlwellen geliefert werden kann. Das könnte durch in dem Stand der Technik übliche Bohrungen in der Triebwelle erfolgen. Somit ist eine hervorragende Versorgung der beanspruchten Lager sichergestellt, was sich in einem sehr effizientem und reibungsarmen Betrieb des Getriebes wiederspiegelt. Weiterhin kann ein Vorteil solcher Anordnung eine leistungsabhängige Schmierung der Triebwellen sein, weil bei größeren durch die Kupplung übertragene Leistungen muss diese mit erhöhter Menge des Schmier- bzw. Kühlmittels versorgt werden, das auch in durch das Leitmittel in die Triebwellen gefördert wird. Nach Bedarf können aber die Dimensionen des Leitmittels insbesondere der Auffangkammern, der Austrittöffnungen und der Ablaufstutzen bzw. die Ausführung der Enden der Triebwelle so angepasst werden, dass die Schmierung nahezu unabhängig von der Menge des geschleuderten Schmiermittels ist.

Das Kupplungsgehäuse hat vorteilhafterweise wenigstens eine durchgehende Öffnung zum Räderkasten, die im Prinzip die Trennwand zwischen dem Kupplungsraum und dem Raum, in dem die Wellen und Zahnräder angeordnet sind, durchgehen. Der Ablaufstutzen ragt durch die Öffnung in den Innenraum der Triebwelle hinein und das Schmiermittel landet somit direkt in den Innenraum der Triebwelle. Die den Triebwellen zugeordnete Öffnungen können in der einfachsten Variante mit Lagersitzen am Enden der Triebwellen übereinstimmen, bzw. eine Bohrung für das Lager in der Trennwand des Kupplungsgehäuses ist als durchgehend ausgeführt. Somit ist eine einfache Herstellung ermöglicht und zusätzlich wird das Lager am Ende der Triebwelle ausreichend von dem in dem Kupplungsgehäuse umlaufenden Schmiermittel geschmiert.

Das Kupplungsgehäuse kann weiterhin wenigstens eine weitere, zum Räderkasten durchgehende Öffnung, aufweisen, die insbesondere im Bereich eines Ausgleichsgetriebes, oder einer anderen schmierungsintensiven Stelle des Getriebes angebracht ist. Diese Öffnung korrespondiert mit der Durchgangsöffnung in dem ersten bzw. zweiten Wandungsbereich des Leitmittels. Im Betrieb des Getriebes wird das mittels der dritten Strömungsmittelabhobelkante abgehobelte Schmiermittel durch die Durchgangöffnung und die Öffnung in dem Kupplungsgehäuse direkt zu z. B. dem Ausgleichsgetriebe, dessen Lager oder dem Ausgangswellenverzahnung gefördert. Somit ist das Kupplungsgehäuse sehr einfach konstruiert, weil sie lediglich die Öffnung aufweist und keine komplizierte Schmiermittelabscheidevorrichtungen. Natürlich können an dem Kupplungsgehäuse, insbesondere an der Seite des Räderkastens, weitere Leitelemente für Leitung des Schmiermittels an die benötigten Stelle vorhanden sein.

Das Leitmittel umfasst zwei Auffangkammern mit den Ablaufstutzen, wobei zwischen diesen Auffangkammern die Durchgangsöffnung mit der dritten Strömungsmittelabhobelkante angeordnet ist. Somit kann die Schmierung sowohl der beiden
Triebwellen, als auch des Ausgleichsgetriebe erzielt werden, wobei das Leitmittel sehr kompakt und dadurch auch billig ist.

Es gibt nun eine Vielzahl von Möglichkeiten, das erfindungsgemäße Leitmittel in vorteilhafter Art und Weise auszugestalten und weiterzubilden. Hierfür darf zunächst auf die dem
Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: das Leitmittel in der bevorzugten Ausführungsform in einer schematischen, teils perspektivischen Darstellung,
- Fig. 2: das in Fig. 1 dargestellte Leitmittel in einer schematischen zweiten, teils perspektivischen Darstellung,
- Fig. 3a - 3c: das in den Fig. 1 und 2 dargestellte Leitmittel in weiteren verschiedenen schematischen Darstellungen, nämlich von vorne, von der Seite sowie teils leicht perspektivisch von außen,
- Fig. 4: das in den Fig. 1 bis 3 dargestellte Leitmittel, angeordnet bzw. montiert im Bereich eines Doppelkupplungsgetriebes, nämlich im Bereich des Außenumfangs einer Doppelkupplung zur Verdeutlichung der zielgerichteten Ableitung des Schmiermittels zu den beiden Triebwellen eines Doppelkupplungsgetriebes in schematischer Darstellung,
- Fig. 5: in schematischer Darstellung eines Kupplungsgehäuse vor der finalen Bearbeitung, ohne eine dort üblicherweise angeordnete Doppelkupplung und ohne ein angeordnetes Leitmittel zur Darstellung der möglichen Positionierung des Leitmittels, sowie auch ohne der durchgehenden Öffnungen zu dem Räderkasten,
- Fig. 6: in schematischer Darstellung ein Kupplungsgehäuse mit dem dort angeordneten Leitmittel (der Fig. 1 bis 3), jedoch ohne eine Doppelkupplung, und
- Fig. 7a, 7b: in schematischen Darstellungen zusätzliche Komponenten des Leitmittels, wie die Ausbildung eines Führungsstiftes und einer am Leitmittel verliersicher angeordneten Schraube zur Vereinfachung der Anordnung beziehungsweise der Montage des Leitmittels.

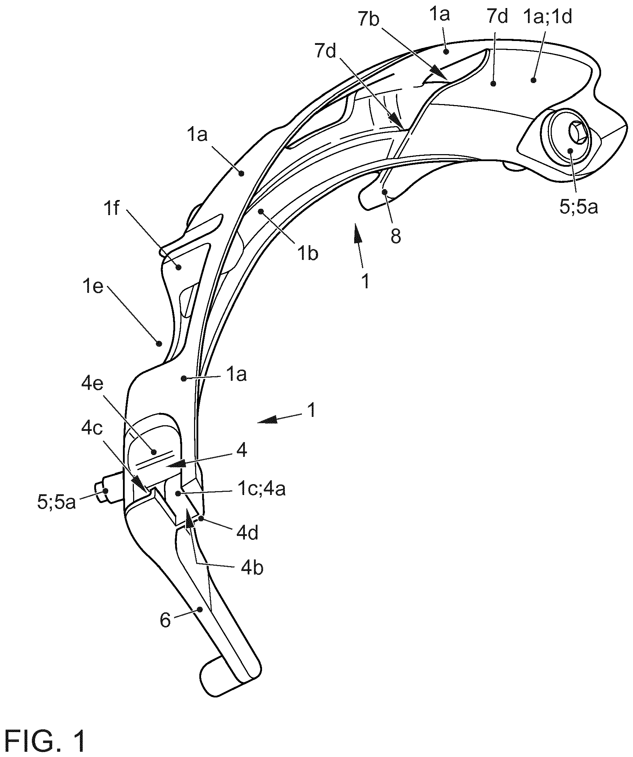

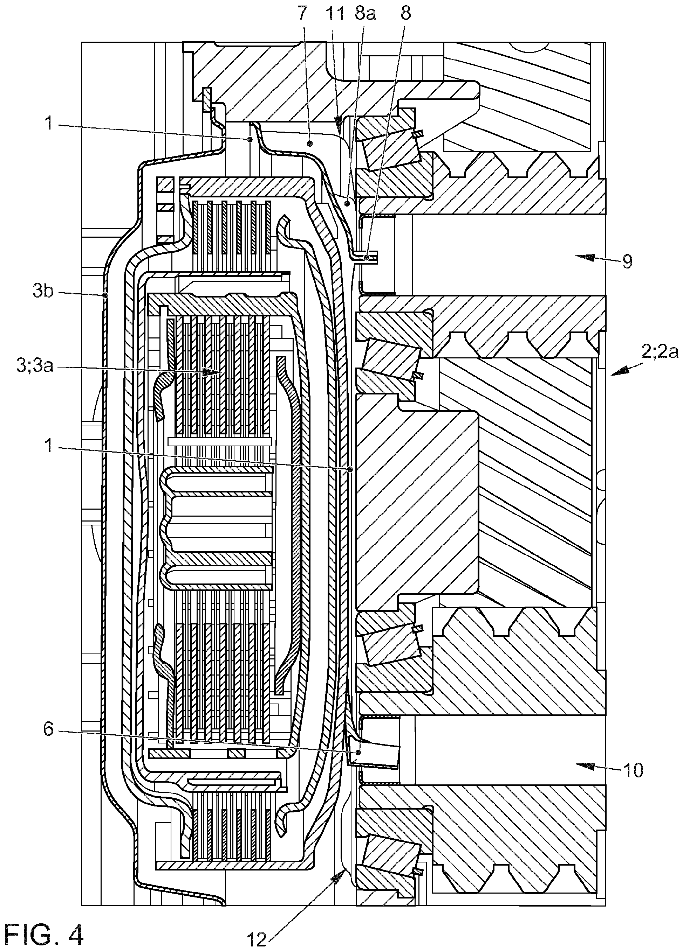

Die Fig. 1 bis 7 zeigen zumindest teilweise ein Leitmittel 1 zur Anordnung im Bereich eines hier nur teilweise dargestellten Getriebes 2 (vgl. Fig. 4), insbesondere im Bereich eines Doppelkupplungsgetriebes 2a und/oder im Bereich einer Kupplung 3, hier einer Doppelkupplung 3a eines nicht im einzelnen dargestellten Kraftfahrzeuges.

Das Leitmittel 1 dient zur zielgerichteten Ableitung und/oder Umleitung zumindest eines Teils einer hier nicht dargestellten Schmiermittel- und/oder Kühlmittelströmung im Bereich des Getriebes 2 und/oder der Kupplung 3. Hierzu wird das Leitmittel 1 im Bereich des Getriebes 2 oder im Bereich der Kupplung 3 entsprechend angeordnet beziehungsweise ist dort entsprechend anordenbar.

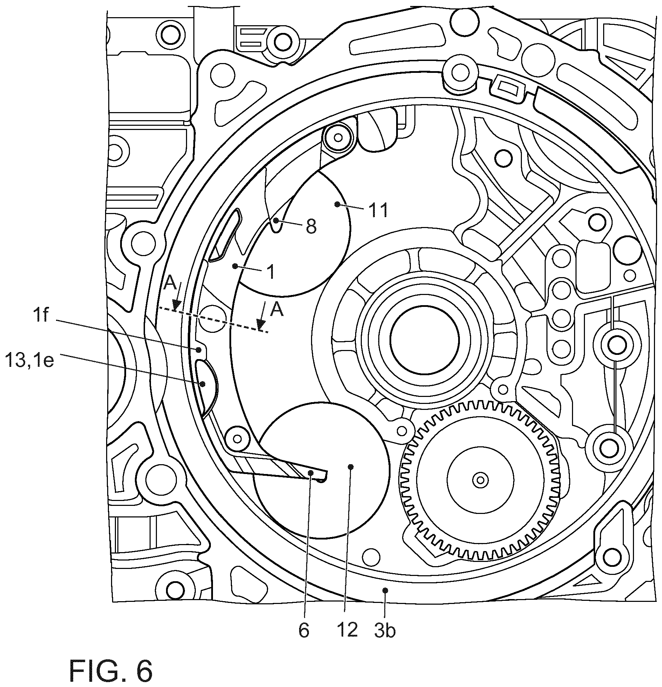

Das Leitmittel 1 weist einen zumindest teilweise gebogenen - ersten - Wandungsbereich 1a auf. Dieser Wandungsbereich 1a dient insbesondere zur Anordnung im Bereich des Außenumfangs einer Kupplung 3, insbesondere einer Doppelkupplung 3a, wie insbesondere aus den Fig. 4 und 6 ersichtlich. Weiterhin weist das Leitmittel 1 mindestens - erste - Auffangkammer 4 zum Auffangen und Ableiten eines Teils der Schmiermittel- und/oder der Kühlmittelströmung auf.

Das Leitmittel 1 ist insbesondere aus Kunststoff hergestellt, kann aber auch als ein Leitblech (aus Metall) ausgebildet werden. Weiterhin weist das Leitmittel 1 einen zweiten Wandungsbereich 1b auf. Der zweite Wandungsbereich 1b erstreckt sich im wesentlichen radial nach innen (im montierten Zustand des Leitmittels 1 betrachtet, wie aus Fig. 4 ersichtlich), wobei das Leitmittel 1 mit Hilfe des zweiten Wandungsbereiches 1b, insbesondere mit Hilfe mindestens eines Befestigungsmittels 5, hier insbesondere einer Schraube 5a, an dem Gehäuse eines Getriebes oder wie hier, insbesondere an dem Kupplungsgehäuse 3b der Kupplung 3 befestigbar ist.

Der erste und zweite Wandungsbereich 1a und 1b des Leitmittels 1 bilden insbesondere im Wesentlichen zueinander einen 90° Grad Winkel, wobei das Leitmittel 1 einteilig ausgebildet ist, also der erste und zweite Wandungsbereich 1a und 1b als integraler Bestandteil des Leitmittels 1 ausgebildet sind.

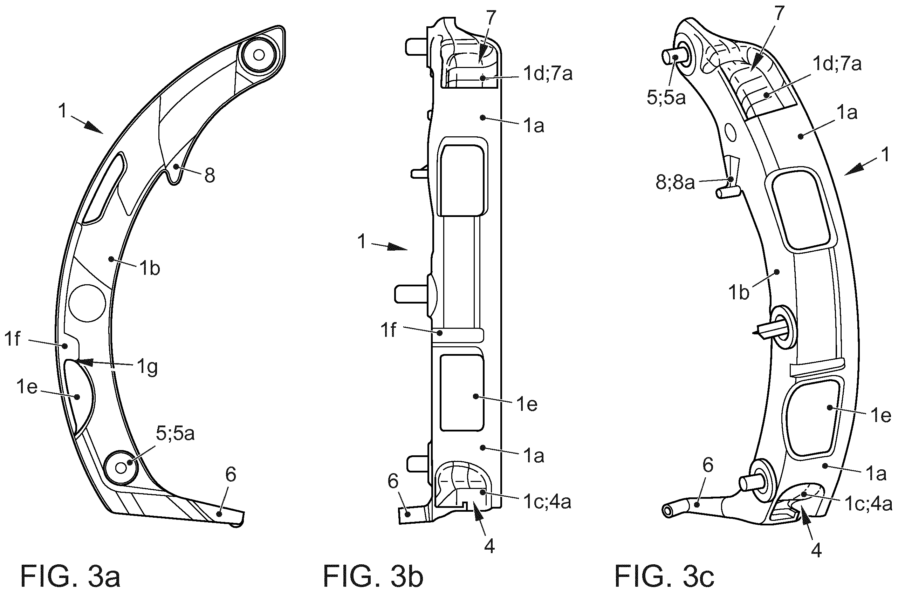

Das Leitmittel 1 weist jedoch nun eine spezifische Form auf beziehungsweise ist spezifisch ausgebildet, woraus sich insbesondere die Vorteile des Leitmittels 1 ergeben. Hierzu darf folgendes nunmehr ausgeführt werden:
Ein Teilbereich 1c des ersten Wandungsbereiches 1a erstreckt sich zur Ausbildung der ersten Auffangkammer 4 zumindest teilweise im Wesentlichen radial nach innen und/oder ist in Richtung radial nach innen muldenförmig ausgebildet ist. Letztes ist insbesondere aus der Fig. 1 im unteren Bereich sowie teilweise aus den Fig. 3b und 3c im jeweils unteren Bereich ersichtlich.

Dadurch, dass nun der Teilbereich 1c des ersten Wandungsbereiches 1a sich im wesentlichen radial nach innen erstreckt beziehungsweise muldenförmig radial nach innen ausgebildet ist, bildet die äußere Seite des ersten Wandungsbereiches 1a im wesentlichen den Bodenbereich 4a der ersten Auffangkammer. Zusätzlich ist die erste Auffangkammer 4 in Richtung radial nach außen offen ausgebildet, wie ebenfalls aus Fig. 1 ersichtlich. Aufgrund der spezifischen Ausbildung der Auffangkammer 4 kann nun das Leitmittel 1 auf einfache Weise im Bereich des Außenumfanges einer Kupplung 3, hier einer Doppelkupplung 3a, insbesondere an einem Kupplungsgehäuse 3b angeordnet werden, wobei hier die nasslaufende Kupplung 3, hier die Doppelkupplung 3a als eine Reibkupplung ausgebildet ist, die insbesondere nicht nur Schmiermittel- beziehungsweise Kühlmitteltropfen nach außen herausschleudert, sondern die in einen "Schmiermittel- beziehungsweise Kühlmittelraum" angeordnet ist, der insbesondere von einer im wesentlichen - aufgrund der Drehbewegung der Kupplung 3 entstehenden - Schmiermittel- beziehungsweise Kühlmittelströmung durchströmt wird.

So ist beispielsweise aus der Fig. 4 gut ersichtlich, dass sich das Leitmittel 1, hier insbesondere sich nicht über die gesamte axiale Länge der Kupplung 3 erstreckt, sondern nur über einen Teilbereich der axialen Länge der Kupplung 3.

Von besonderem Vorteil ist nun, dass die Auffangkammer 4 eine Eintrittsöffnung 4b, sowie eine Austrittsöffnung 4c aufweist, wobei aber im Bereich der Eintrittsöffnung 4b durch den entsprechenden Teilbereich 1c des ersten Wandungsbereiches 1a eine erste Strömungsmittelabhobelkante 4d gebildet ist. Durch diese erste Strömungsmittelabhobelkante 4d wird (quasi) die, teilweise in radialer, teilweise in tangentialer Richtung - aufgrund der Drehbewegung der Kupplung 3 - strömende Schmiermittel- und/oder Kühlmittelströmung am Außenumfang der Kupplung 3 "abgehobelt". Mit dem Wort "abgehobelt" beziehungsweise "Hobel" ist nun nicht gemeint, dass die Strömungsmittelabhobelkante 4d mit dem Außenumfang der Kupplung 3 direkt in Kontakt steht, sondern dass diese Strömungsmittelabhobelkante 4d strömungsfunktionstechnisch "hobelähnlich ausgebildet" bzw. entsprechend wirksam ist.

Aus den Fig. 1 bis 3 ist insbesondere auch gut zu erkennen, dass das Leitmittel 1 einen - ersten - Ablaufstutzen 6 aufweist, wobei der Ablaufstutzen 6 einen ersten Strömungskanal 6a aufweist beziehungsweise ausbildet. Der Strömungskanal 6a ist mit der Austrittsöffnung 4c der Auffangkammer 4 strömungsverbunden.

Damit das Schmier- beziehungsweise Kühlmittel von der Eintrittsöffnung 4b der Auffangkammer 4 zur Austrittsöffnung 4c und dann in den Strömungskanal 6a des ersten Ablaufstutzens 6 gelangen kann, weist die Auffangkammer 4 einen Umlenkbereich 4e auf, der auch Teil des Bodenbereiches 4a beziehungsweise des Teilbereiches 1c ist, so dass das Strömungsmittel, also das Schmier- und/oder Kühlmittel von der Eintrittsöffnung 4b zur Austrittsöffnung 4c umgelenkt wird. So schützt der Bodenbereich 4a das in der Auffangkammer 4 gesammelte Schmier- bzw. Kühlmittel auch vor weiteren Schmier- und/oder Kühlmitteltropfen, die gegen die radiale Innenseite des Teilbereichs 1c prallen und/oder vor evtl. einer dort noch vorhandenen Teilströmung des Schmier- bzw. Kühlmittels.

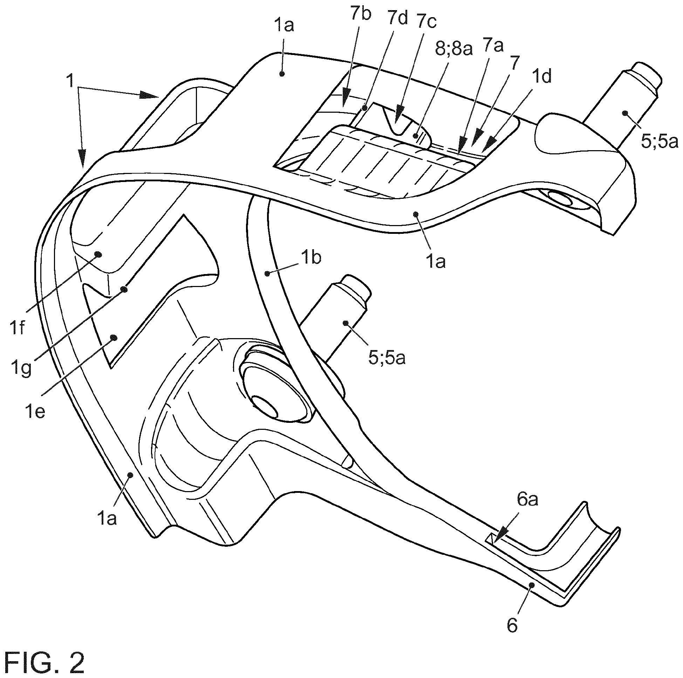

Vorzugsweise ist der Strömungskanal 6a des Ablaufstutzens 6 zumindest teilweise geschlossen ausgebildet, wie unten rechts aus Fig. 2 erkennbar. Dies hat den Zweck, dass, unabhängig von einer äußeren Anströmung des Ablaufstutzens 6 von anderweitigem Schmier- beziehungsweise Kühlmittel, das im Strömungskanal 6a sich befindende Schmier- beziehungsweise Kühlmittel ungestört von der Austrittsöffnung 4c der Auffangkammer 4 zum Ende des Ablaufstutzens 6 fließen und dort zielgerichtet abgeleitet werden kann. Insbesondere ist das Leitmittel 1 nun so angeordnet, dass aufgrund der Schwerkraft die Ableitung des Schmier- und/oder Kühlmittels entsprechend realisiert ist, also das Schmier- und Kühlmittel von der Auffangkammer 4 über den Ablaufstutzen 6 zielgerichtet mit Hilfe der Schwerkraft abgeleitet werden kann.

Das hier in den Fig. 1 bis 3 dargestellte Leitmittel 1 weist mehrere Auffangkammern auf, nämlich die erste Auffangkammer 4 und eine weitere zweite Auffangkammer 7.

Die zweite Auffangkammer 7 ist in Fig. 1 am oberen rechten Ende, beziehungsweise in Fig. 2 am oberen rechten Ende des Leitmittels 1 gut erkennbar dargestellt, sowie jeweils in den Fig. 3b und 3c teilweise am oberen Ende des dortigen Leitmittels 1 erkennbar.

Weiterhin ist die obere zweite Auffangkammer 7 auch in Fig. 4 erkennbar dargestellt.

Die zweite Auffangkammer 7 weist ebenfalls einen Bodenbereich 7a, eine Eintrittsöffnung 7b, eine Austrittsöffnung 7c und eine zweite Strömungsmittelabhobelkante 7d auf. Die obigen Ausführungen zur ersten Auffangkammer 4 gelten im wesentlichen auch für die zweite Auffangkammer 7. Auch hier ist der Bodenbereich 7a als ein Teilbereich 1d des ersten Wandungsbereiches 1a ausgebildet. Auch die zweite Auffangkammer 7 ist muldenförmig ausgebildet beziehungsweise erstreckt sich hier der Teilbereich 1d des ersten Wandungsbereiches 1a zur Ausbildung der zweiten Auffangkammer 7 im wesentlichen radial nach innen, so wie aus den Fig. 1 und 2 oben rechts ersichtlich. Auch ist die zweite Auffangkammer 7 in Richtung radial nach außen offen ausgebildet, wobei die Austrittsöffnung 7c der zweiten Auffangkammer 7 mit einem zweiten Ablaufstutzen 8 strömungsverbunden ist, der wiederum einen zweiten Strömungskanal 8a aufweist. Auch der zweite Strömungskanal 8a ist mit der Austrittsöffnung 7c strömungsverbunden, wobei der zweite Strömungskanal 8a insbesondere teilweise geschlossen innerhalb des zweiten Ablaufstutzens 8 ausgebildet ist, damit eine anderweitige Schmiermittel- beziehungsweise Kühlmittelströmung das ungehinderte zielgerichtete Abfließen beziehungsweise das Umleiten der von der zweiten Auffangkammer 7 in den Ablaufstutzen 8 ablaufenden Schmiermittel- beziehungsweise Kühlmittelströmung nicht behindert.

Zwischen der ersten Auffangkammer 4 und der zweiten Auffangkammer 7 ist in dem ersten Wandungsbereich 1a und dem zweiten Wandungsbereich 1b eine Durchgangsöffnung 1e angeordnet. Die Durchgangsöffnung 1e ist an der Seite durch einen sich im Wesentlichen radial nach innen erstreckenden Auffangbereich 1f des ersten Wandungsbereichs begrenzt, wobei der Auffangbereich 1f eine dritte Strömungsmittelabhobelkante 1g bildet. Mittels der dritten Strömungsmittelabhob 1g wird im Betrieb das Schmiermittel abgehobelt und in die Durchgangsöffnung 1e gefördert.

Wiederum ist der zweite Ablaufstutzen 8 beziehungsweise das Leitmittel 1 so positioniert und/oder angeordnet, dass aufgrund der Schwerkraft die Ableitung des Schmier- und/oder Kühlmittels innerhalb des zweiten Strömungskanals 8a auf einfache Weise zielgerichtet ermöglicht ist.

Wie nun die Fig. 4 zeigt, ist hier das Leitmittel 1 im Bereich des Außenumfanges einer Kupplung 3, hier der Doppelkupplung 3a entsprechend angeordnet, wobei über die beiden Ablaufstutzen 6 und 8 hier nun die Triebwellen 9 und 10 eines nicht im einzelnen dargestellten Doppelkupplungsgetriebes 2a mit Schmier- beziehungsweise Kühlmittel versorgt werden. Es ist in Fig. 4 gut ersichtlich, dass das Kupplungsgehäuse 3b durchgehende Öffnungen 11, 12 zum Räderkasten aufweist und dass die jeweiligen Endbereiche der Ablaufstutzen 6 und 8 durch diese Öffnungen 11, 12 in die Innenräume der Triebwellen 9, 10 hineinragen und das Schmierbeziehungsweise Kühlmittel zu denen, nämlich hier zur jeweiligen Eingangsbereichen der Triebwellen 9 und 10 leiten. In den Öffnungen 11 ,12 sitzen die nicht näher bezeichneten Rillenlager der Ende der Triebwellen 9, 10. Weiterhin sind aus der Fig. 4 nicht näher bezeichnete Stopfen in den Enden der Innenräume der Triebwellen 9, 10 offensichtlich, die von den jeweiligen Endbereichen der Ablaufstutzen 6, 8 durchgegangen sind. Diese Stopfen sind in die Triebwellen 9, 10 eingesteckt und schließen teilweise die Innenräume der wenigstens teilweise als Hohlwelle ausgeführten Triebwellen 9, 10 ab. Somit verhindern die Stopfen Austreten des Schmiermittels aus den Innenräume der Treibwellen 9, 10 dank der Fliehkraft, und erhalten ein benötigtes Niveau des Schmiermittels auf den Wänden des Innenraumes, die für eine gute Schmierung der Lager der auf den Triebwellen 9, 10 drehbar gelagerten Teilen notwendig ist.

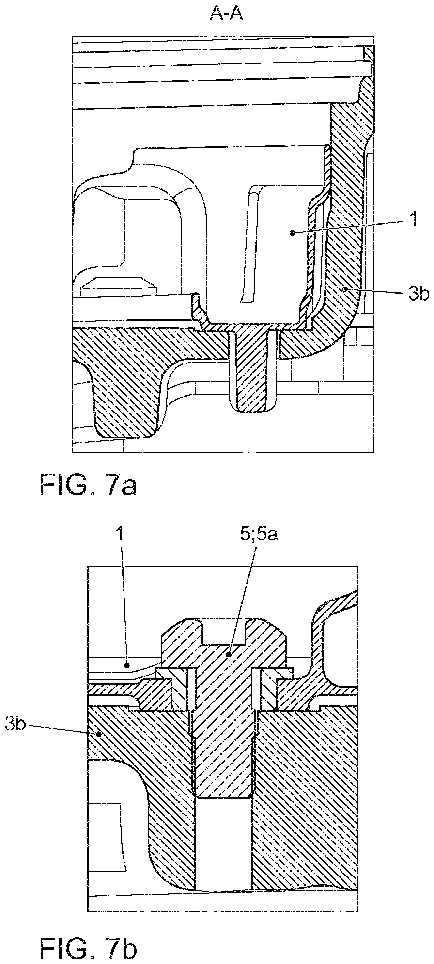

In bevorzugter Ausgestaltung, wird das Leitmittel 1 innerhalb eines Kupplungsgehäuses 3b so wie in Fig. 6 dargestellt angeordnet und ist hier entsprechend befestigt. Hierzu dienen entsprechende Befestigungsmittel 5, insbesondere Schrauben 5a, die am oberen und unteren Endbereich des Leitmittels 1 vorgesehen, insbesondere hier - wie aus Fig. 7b - ersichtlich verliersicher angeordnet sind. Das Kupplungsgehäuse 3b hat weiterhin eine durchgehende Öffnung 15 zu dem Räderkasten im Bereich des Ausgleichsgetriebe, die im montierten Zustand des Leitmittels 1 mit dessen Durchgangöffnung 1e korrespondiert. Das mittels der dritten Strömungsmittelabhobelkante 1g abgehobelte Schmiermittel, das durch die Durchgangöffnung 1e gefördert wird, kann somit direkt im Bereich des Ausgleichsgetriebes gelangen und benötigte Schmierung sicherzustellen.

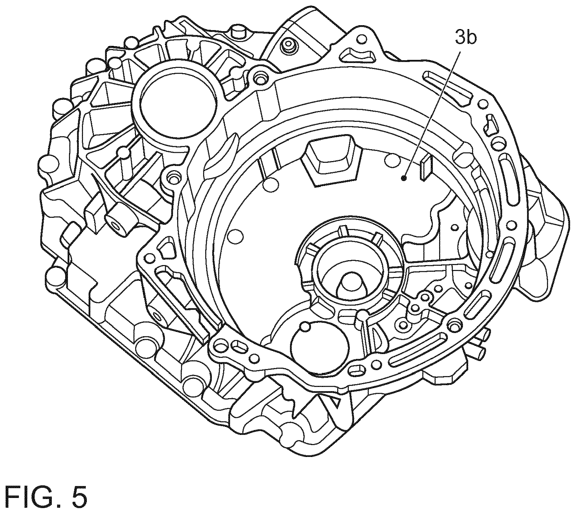

Zusätzlich sind, wie aus Fig. 7a ersichtlich, nicht näher bezeichnete Führungsstifte als integrale Bestandteile des Leitmittel 1 vorgesehen, die in nicht näher bezeichnete Öffnungen des Kupplungsgehäuses 3b eingreifen können. Mit Hilfe der Befestigungsmittel 5, insbesondere der Schrauben 5a und der nicht näher bezeichneten Führungsstifte können auf einfache Weise derartige Leitmittel 1 gut in Kupplungsgehäusen 3b positioniert werden, wobei auch, wie aus Fig. 5 ersichtlich, andere Komponenten wie Deckel und/oder Abschlüsse des Kupplungsgehäuses gut und einfach bearbeitbar sind, insbesondere nämlich separate Rippen und/oder Anlageflächen für entsprechende Leitmittel 1 vorgesehen sein können.

Vorzugsweise wird daher das in den Fig. 1 bis 3 dargestellte Leitmittel 1 für eine Kupplung 3, insbesondere für eine Doppelkupplung 3a, vorzugsweise für eine nasslaufende Reibkupplung verwendet und im Bereich eines entsprechenden Kupplungsgehäuses 3b angeordnet beziehungsweise vorzugsweise im Bereich eines Doppelkupplungsgetriebes 2a vorgesehen. Über die Ablaufstutzen 6 und 8 ist eine zielgerichtete Versorgung der Triebwellen 9 und 10 eines Doppelkupplungsgetriebes 2a mit Schmier- und/oder Kühlmittel realisiert.

Mit dem Leitmittel 1 ist, da dieses mehrere Auffangkammern, hier insbesondere die Auffangkammern 4 und 7 aufweist, ein "multifunktionales" Leitmittel 1 realisiert, das auf einfache Weise montiert werden kann, wobei dieses Leitmittel 1
insbesondere nicht nur von der Kupplung 3 herausgeschleuderte Schmiermittelbeziehungsweise Kühlmitteltropfen auffangen kann, sondern insbesondere eine in einem Schmiermittel- beziehungsweise Kühlmittelraum entstehende kontinuierliche Strömung mit Hilfe der am Leitmittel 1 realisierten Strömungsmittelabhobelkanten 4d beziehungsweise 7d in strömungstechnischer Weise zielgerichtet auffangen und weiter ableiten kann.

Das Leitmittel 1 weist mehrere Auffangkammern auf, so dass die oben beschriebene Multifunktionalität und der flexible Einsatz eines derartigen Leitmittels mit den damit einhergehenden Vorteilen realisiert sind.

### Bezugszeichenliste

- 1: Leitmittel
- 1a: erster Wandungsbereich
- 1b: zweiter Wandungsbereich
- 1c: Teilbereich
- 1d: Teilbereich
- 1e: Durchgangöffnung
- 1f: Auffangbereich
- 1g: dritte Strömungsmittelabhobelkante
- 2: Getriebe
- 2a: Doppelkupplungsgetriebe
- 3: Kupplung
- 3a: Doppelkupplung
- 3b: Kupplungsgehäuse
- 4: erste Auffangkammer
- 4a: Bodenbereich
- 4b: Eintrittsöffnung
- 4c: Austrittsöffnung
- 4d: erste Strömungsmittelabhobelkante
- 4e: Umlenkbereich
- 5: Befestigungsmittel
- 5a: Schraube
- 6: erster Ablaufstutzen
- 6a: erster Strömungskanal
- 7: zweite Auffangkammer
- 7a: Bodenbereich
- 7b: Eintrittsöffnung
- 7c: Austrittsöffnung
- 7d: zweite Strömungsmittelabhobelkante
- 8: zweiter Ablaufstutzen
- 8a: zweiter Strömungskanal
- 9: Triebwelle
- 10: Triebwelle
- 11: Öffnung
- 12: Öffnung
- 13: Öffnung

## Patentansprüche

1. Leitmittel (1) zur Anordnung im Bereich eines Getriebes (2) und/oder einer Kupplung (3) eines Kraftfahrzeuges, wobei das Leitmittel (1) zur zielgerichteten Ableitung und/oder Umleitung zumindest eines Teils einer Schmiermittel- und/oder einer Kühlmittelströmung im Bereich des Getriebes (2) und/oder der Kupplung (3) angeordnet oder anordenbar ist, wobei das Leitmittel (1) einen zumindest teilweise gebogenen -ersten-Wandungsbereich (1a), und mindestens eine erste Auffangkammer (4) zum Auffangen und Ableiten eines Teils der Schmiermittel- und/oder der Kühlmittelströmung aufweist, wobei ein Teilbereich (1c) des ersten Wandungsbereichs (1a) zur Ausbildung der ersten Auffangkammer (4) sich zumindest teilweise im Wesentlichen radial nach innen erstreckt und/oder in Richtung radial nach innen muldenförmig ausgebildet ist, wobei die erste Auffangkammer (4) eine Eintrittsöffnung (4b) und eine Austrittsöffnung (4c) aufweist und im Bereich der Eintrittsöffnung (4b) durch den entsprechenden Teilbereich (1c) des ersten Wandungsbereichs (1a) eine erste Strömungsmittelabhobelkante (4d) ausgebildet ist, **dadurch gekennzeichnet, dass** eine zweite Auffangkammer (7) vorgesehen und/oder ausgebildet ist, wobei die zweite Auffangkammer (7) eine Eintrittsöffnung (7b) und eine Austrittsöffnung (7c) aufweist und im Bereich der Eintrittsöffnung (7b) durch einen entsprechenden Teilbereich (1d) des ersten Wandungsbereichs (1a) eine zweite Strömungsmittelabhobelkante (7d) ausgebildet ist, und dass der erste Wandungsbereich (1a) und/oder ein zweiter Wandungsbereich (1b) eine Durchgangsöffnung (1e) aufweist, wobei der Durchgangsöffnung (1e) ein sich im Wesentlichen radial nach innen erstreckender Auffangbereich (1f) des ersten Wandungsbereichs (1a) benachbart ist und wobei der Auffangbereich (1f) eine dritte Strömungsmittelabhobelkante (1g) bildet.

2. Leitmittel nach Anspruch 1, **dadurch gekennzeichnet, dass** die Auffangkammer (4) in Richtung radial nach aussen offen ausgebildet ist.

3. Leitmittel nach einem der vorstehenden Ansprüche, **dadurch gekennzeichnet, dass** das Leitmittel (1) einen - ersten - Ablaufstutzen (6) aufweist und der Ablaufstutzen (6) einen - ersten - Strömungskanal (6a) aufweist und/oder ausbildet, wobei der Strömungskanal (6a) mit der Austrittsöffnung (4c) strömungsverbunden ist.

4. Leitmittel nach einem der vorstehenden Ansprüche, **dadurch gekennzeichnet, dass** die - erste - Auffangkammer (4) einen Umlenkbereich (4e) aufweist zur Umlenkung des Strömungsmittels von der Eintrittsöffnung (4b) zur Austrittsöffnung (4c).

5. Leitmittel nach einem der vorstehenden Ansprüche, **dadurch gekennzeichnet, dass** das Leitmittel (1) einen sich teilweise radial, insbesondere nach innen erstreckenden zweiten Wandungsbereich (1b) aufweist, wobei das Leitmittel (1) mit Hilfe des zweiten Wandungsbereichs (1b) und/oder mindestens eines Befestigungsmittels (5), insbesondere einer Schraube (5a), an dem Gehäuse eines Getriebes (2) oder einer Kupplung (3) befestigbar ist.

6. Leitmittel nach einem der vorstehenden Ansprüche, **dadurch gekennzeichnet, dass** das Leitmittel (1) einen - zweiten - Ablaufstutzen (8) aufweist und der Ablaufstutzen (8) einen - zweiten - Strömungskanal (8a) aufweist und/oder ausbildet, wobei der Strömungskanal (8a) mit der Austrittsöffnung (7c) der zweiten Auffangkammer (7) strömungsverbunden ist.

7. Leitmittel nach einem der vorstehenden Ansprüche, **dadurch gekennzeichnet, dass** die Austrittsöffnung (4c, 7c) der ersten und/oder der zweiten Auffangkammer (4, 7) und/oder der erste und/oder zweite Ablaufstutzen (6, 8) so ausgebildet ist bzw. sind, so dass aufgrund der Schwerkraft die Ableitung des Schmier- und/oder Kühlmittels realisiert ist.

8. Getriebe mit einer nasslaufenden Reibkupplung, insbesondere ein Doppelkupplungsgetriebe (2a), wobei am Kupplungsgehäuse (3b) mindestens ein Leitmittel (1) nach einem der Ansprüche 1 bis 7 vorgesehen und/oder angeordnet ist, wobei über wenigstens einen der Ablaufstutzen (6, 8) eine zielgerichtete Versorgung wenigstens einer der Triebwellen (9, 10) des Doppelkupplungsgetriebes (2a) mit Schmier- und/oder Kühlmittel realisiert ist.

9. Getriebe nach dem Anspruch 8, **dadurch gekennzeichnet, dass** die Triebwelle (9, 10) als Hohlwelle ausgeführt ist und dass der Ablaufstutzen (6, 8) strömungstechnisch mit der Innenraum der Triebwelle (9, 10) verbunden ist.

10. Getriebe nach dem Anspruch 8 **dadurch gekennzeichnet, dass** das Kupplungsgehäuse (3b) wenigstens eine durchgehende Öffnung (11, 12) zum Räderkasten aufweist, wobei der Ablaufstutzen (6, 8) durch die Öffnung (11, 12) in den Innenraum der Triebwelle (9, 10) hineinragt.

11. Getriebe nach einem der Ansprüche 8 bis 10 **dadurch gekennzeichnet, dass** das Kupplungsgehäuse (3b) wenigstens eine durchgehende Öffnung (13) zum Räderkasten, insbesondere im Bereich eines Ausgleichsgetriebes, aufweist, wobei die Öffnung (13) mit der Durchgangsöffnung (1e) korrespondiert.

## Claims

1. Guide means (1) for arranging in the region of a transmission (2) and/or a clutch (3) of a motor vehicle, the guide means (1) being arranged or being capable of being arranged in the region of the transmission (2) and/or the clutch (3) for the targeted diversion and/or deflection of at least one part of a lubricant and/or coolant flow, the guide means (1) having an at least partially curved first wall region (1a), and at least one first collecting chamber (4) for collecting and diverting a part of the lubricant and/or coolant flow, a part region (1c) of the first wall region (1a), for the configuration of the first collecting chamber (4), extending at least partially substantially radially to the inside and/or being of recess-shaped configuration in the direction radially to the inside, the first collecting chamber (4) having an inlet opening (4b) and an outlet opening (4c), and a first flow medium scraper edge (4d) being configured in the region of the inlet opening (4b) by way of the corresponding part region (1c) of the first wall region (1a), **characterized in that** a second collecting chamber (7) is provided and/or configured, the second collecting chamber (7) having an inlet opening (7b) and an outlet opening (7c), and a second flow medium scraper edge (7d) being configured in the region of the inlet opening (7b) by way of a corresponding part region (1d) of the first wall region (1a), and **in that** the first wall region (1a) and/or a second wall region (1b) have/has a through opening (1e), the through opening (1e) being adjoined by a substantially radially inwardly extending collecting region (1f) of the first wall region (1a), and the collecting region (1f) forming a third flow medium scraper edge (1g).

2. Guide means according to Claim 1, **characterized in that** the collecting chamber (4) is of open configuration in the direction radially to the outside.

3. Guide means according to either of the preceding claims, **characterized in that** the guide means (1) has a first outlet stub (6), and the outlet stub (6) has and/or configures a first flow duct (6a), the flow duct (6a) being flow-connected to the outlet opening (4c).

4. Guide means according to one of the preceding claims, **characterized in that** the first collecting chamber (4) has a deflecting region (4e) for deflecting the flow medium from the inlet opening (4b) to the outlet opening (4c).

5. Guide means according to one of the preceding claims, **characterized in that** the guide means (1) has a partially radially, in particular inwardly extending second wall region (1b), it being possible for the guide means (1) to be fastened to the housing of a transmission (2) or a clutch (3) with the aid of the second wall region (1b) and/or at least one fastening means (5), in particular a bolt (5a).

6. Guide means according to one of the preceding claims, **characterized in that** the guide means (1) has a second outlet stub (8), and the outlet stub (8) has an/or configures a second flow duct (8a), the flow duct (8a) being flow-connected to the outlet opening (7c) of the second collecting chamber (7).

7. Guide means according to one of the preceding claims, **characterized in that** the outlet opening (4c, 7c) of the first and/or of the second collecting chamber (4, 7) and/or the first and/or second outlet stub (6, 8) are/is configured in such a way that the diversion of the lubricant and/or coolant is realized on the basis of gravity.

8. Transmission having a wet-running friction clutch, in particular a double clutch transmission (2a), at least one guide means (1) according to one of Claims 1 to 7 being provided and/or arranged on the clutch housing (3b), a targeted supply of at least one of the drive shafts (9, 10) of the double clutch transmission (2a) with lubricant and/or coolant being realized via at least one of the outlet stubs (6, 8).

9. Transmission according to Claim 8, **characterized in that** the drive shaft (9, 10) is configured as a hollow shaft, and **in that** the outlet stub (6, 8) is connected in flow terms to the interior space of the drive shaft (9, 10).

10. Transmission according to Claim 8, **characterized in that** the clutch housing (3b) has at least one continuous opening (11, 12) to the gear housing, the outlet stub (6, 8) protruding through the opening (11, 12) into the interior space of the drive shaft (9, 10).

11. Transmission according to one of Claims 8 to 10, **characterized in that** the clutch housing (3b) has at least one continuous opening (13) to the gear housing, in particular in the region of a differential gear, the opening (13) corresponding with the through opening (1e).

## Revendications

1. Moyen de guidage (1) destiné à être placé au niveau d'une transmission (2) et/ou d'un accouplement (3) d'un véhicule automobile, le moyen de guidage (1) étant disposé ou pouvant être disposé au niveau de la transmission (2) et/ou de l'accouplement (3) de manière à dévier et/ou rediriger de façon ciblée au moins une partie d'un écoulement de lubrifiant et/ou d'un agent de refroidissement, le moyen de guidage (1) comportant une - première - zone de paroi (1a) au moins partiellement incurvée et au moins une première chambre de collecte (4) destinée à collecter et dévier une partie de l'écoulement de lubrifiant et/ou de l'agent de refroidissement,
une partie (1c) de la première zone de paroi (1a) s'étendant au moins en partie sensiblement radialement vers l'intérieur et/ou étant réalisée en forme de cuvette radialement vers l'intérieur pour former la première chambre de collecte (4), la première chambre de collecte (4) comportant une ouverture d'entrée (4b) et une ouverture de sortie (4c) et un premier bord de raclage d'agent d'écoulement (4d) étant formé au niveau de l'ouverture d'entrée (4b) ménagée à travers la partie correspondante (1c) de la première zone de paroi (1a), **caractérisé en ce qu'**une deuxième chambre de collecte (7) est prévue et/ou formée, la deuxième chambre de collecte (7) comportant une ouverture d'entrée (7b) et une ouverture de sortie (7c) et un deuxième bord de raclage d'agent d'écoulement (7d) étant formé au niveau de l'ouverture d'entrée (7b) ménagée à travers une zone correspondante (1d) de la première zone de paroi (1a) et **en ce que** la première zone de paroi (1a) et/ou une deuxième zone de paroi (1b) comporte une ouverture de passage (le), l'ouverture de passage (1e) étant adjacente à une zone de collecte (1f), s'étendant sensiblement radialement vers l'intérieur, de la première zone de paroi (1a) et la zone de collecte (1f) formant un troisième bord de raclage d'agent d'écoulement (1g).

2. Moyen de guidage selon la revendication 1, **caractérisé en ce que** la chambre de collecte (4) est conçue pour être ouverte radialement vers l'extérieur.

3. Moyen de guidage selon l'une des revendications précédentes, **caractérisé en ce que** le moyen de guidage (1) comporte une - première - tubulure d'évacuation (6) et la tubulure d'évacuation (6) comporte et/ou forme un - premier - conduit d'écoulement (6a), le conduit d'écoulement (6a) étant relié fluidiquement à l'ouverture de sortie (4c).

4. Moyen de guidage selon l'une des revendications précédentes, **caractérisé en ce que** la - première - chambre de collecte (4) comporte une zone de déviation (4e) destinée à dévier l'agent d'écoulement de l'ouverture d'entrée (4b) vers l'ouverture de sortie (4c) .

5. Moyen de guidage selon l'une des revendications précédentes, **caractérisé en ce que** le moyen de guidage (1) comporte une deuxième zone de paroi (1b) s'étendant en partie radialement, en particulier vers l'intérieur, le moyen de guidage (1) pouvant être fixé au boîtier d'une transmission (2) ou d'un accouplement (3) à l'aide de la deuxième zone de paroi (1b) et/ou d'au moins un moyen de fixation (5), en particulier d'une vis (5a).

6. Moyen de guidage selon l'une des revendications précédentes, **caractérisé en ce que** le moyen de guidage (1) comporte une - deuxième - tubulure d'évacuation (8) et la tubulure d'évacuation (8) comporte et/ou forme un - deuxième - conduit d'écoulement (8a), le conduit d'écoulement (8a) étant relié fluidiquement à l'ouverture de sortie (7c) de la deuxième chambre de collecte (7).

7. Moyen de guidage selon l'une des revendications précédentes, **caractérisé en ce que** l'ouverture de sortie (4c, 7c) de la première et/ou de la deuxième chambre de collecte (4, 7) et/ou la première et/ou la deuxième tubulure d'évacuation (6, 8) sont formées de telle sorte que la déviation du lubrifiant et/ou de l'agent de refroidissement est effectuée par gravité.

8. Transmission munie d'un accouplement à friction humide, en particulier une transmission à double accouplement (2a), au moins un moyen de guidage (1) selon l'une des revendications 1 à 7 étant prévu et/ou disposé au niveau du boîtier d'accouplement (3b), l'un au moins des arbres d'entraînement (9, 10) de la transmission à double accouplement (2a) étant alimenté de manière ciblée avec un lubrifiant et/ou un agent de refroidissement par le biais d'au moins l'une des tubulures d'évacuation (6, 8).

9. Transmission selon la revendication 8, **caractérisée en ce que** l'arbre d'entraînement (9, 10) est conçu comme un arbre creux et **en ce que** la tubulure d'évacuation (6, 8) est en communication fluidique avec l'espace intérieur de l'arbre d'entraînement (9, 10).

10. Transmission selon la revendication 8, **caractérisée en ce que** le boîtier d'accouplement (3b) comporte au moins une ouverture traversante (11, 12) menant à la boîte d'engrenages, la tubulure d'évacuation (6, 8) saillant à travers l'ouverture (11, 12) dans l'espace intérieur de l'arbre d'entraînement (9, 10).

11. Transmission selon l'une quelconque des revendications 8 à 10, **caractérisée en ce que** le boîtier d'accouplement (3b) comporte au moins une ouverture traversante (13) menant à la boîte d'engrenages, en particulier au niveau d'un engrenage différentiel, l'ouverture (13) correspondant à l'ouverture de passage (1e).
